**Europäisches Patentamt**

**European Patent Office**

**Office européen des brevets**

(11) Veröffentlichungsnummer: **0 141 249**
**B1**

(12) **EUROPÄISCHE PATENTSCHRIFT**

(45) Veröffentlichungstag der Patentschrift:
**07.12.88**

(51) Int. Cl.⁴: **A 01 C 7/04**

(21) Anmeldenummer: **84111439.0**

(22) Anmeldetag: **26.09.84**

(54) **Einzelkornsämaschine.**

(30) Priorität: **10.10.83 DE 3336782**
**10.10.83 DE 3336823**

(43) Veröffentlichungstag der Anmeldung:
**15.05.85 Patentblatt 85/20**

(45) Bekanntmachung des Hinweises auf die Patenterteilung:
**07.12.88 Patentblatt 88/49**

(84) Benannte Vertragsstaaten:
**AT BE CH DE FR GB IT LI LU NL SE**

(56) Entgegenhaltungen:
**DE-A- 1 457 832**
**GB-A- 2 012 534**
**US-A- 3 982 661**

(73) Patentinhaber: **Powilleit, Hansherger, Dipl.-Ing., Am hohlen Berg 4, D-4000 Düsseldorf 12 (DE)**

(72) Erfinder: **Powilleit, Hansherger, Dipl.-Ing., Am hohlen Berg 4, D-4000 Düsseldorf 12 (DE)**

(74) Vertreter: **König, Werner, Dipl.-Ing., Habsburgerallee 23-25, D-5100 Aachen (DE)**

## Beschreibung

Die Erfindung betrifft eine Einzelkornsämaschine mit einem Saatgutbehälter, mit einem radial nach aussen offene Zellen zur Einzelaufnahme von Saatkörnern aufweisenden Zellenrad, das weitgehend von einem Gehäuse umschlossen um eine im wesentlichen horizontal verlaufende Achse drehbar ist und mit einem Teil seines Umfangsbereichs den unteren Teil des Saatgutbehälters abgrenzt, und mit einem ebenfalls um eine im wesentlichen horizontale, quer zur Fahrtrichtung der Einzelkornsämaschine verlaufende Achse drehbaren Särad, welches in seinem oberen Bereich mit dem Zellenrad zusammenarbeitet und an seinem Umfang die in den Zellen befindlichen vereinzelten Saatkörner aufnehmende, zwischen sich einen in Umfangsrichtung verlaufenden Spalt frei lassende, in Achsrichtung elastische ringförmige Klemmelemente aufweist, welche den Abstand der Saatkörper in einer einstellbaren Relation zum Abstand der Zellen halten, die Körner mitnehmen und im unteren Bereich abgeben.

Zur Erlangung eines an die Laborkeimfähigkeit heranreichenden Feldaufganges des Saatguts müssen optimale Keim- und Aufwuchsbedingungen auf dem Feld schon bei der Aussaat geschaffen werden. Der Feldaufgang des Saatguts wird entscheidend von der Bodentemperatur und -feuchte beeinflusst. Die Bodentemperatur muss die Keimtemperatur überschreiten, damit der Keimvorgang ausgelöst wird. Gleichzeitig muss genügend Bodenfeuchte vorhanden sein, um die Keimentwicklung beginnen zu lassen, um anschliessend die Entwicklung einer gesunden Pflanze zu ermöglichen. Aus diesem Grunde wurde schon sehr früh über eine Rückverfestigung des vorbereiteten Bodens bei der Aussaat nachgedacht, um dadurch vor allem eine Verbesserung der kapillaren Wasserführung zu erreichen.

So ist eine Vorrichtung bekannt (US-A-3 982 661), die im unteren Bereich eines Saatgutbehälters ein über zwei Rollen geführtes Förderband aufweist, dessen unterer Trum dicht über einem Umfangsabschnitt eines rotierenden Mantels verläuft. Das Förderband fördert Saatkörner aus dem Saatgutbehälter in den Raum zwischen dem unteren Trum des Förderbandes und dem Mantel. In diesem Mantel sind Aufnahmebohrungen vorgesehen, in welche von radial innen her Stössel eingreifen, welche über eine feststehende Kurvenbahn so gesteuert werden, dass sie in der unteren Position des Mantels radial nach aussen durch die Aufnahmebohrungen hindurchgedrückt werden und die Saatkörner in den Boden eindrükken.

Die bekannte Vorrichtung erfordert einen beträchtlichen apparativen Aufwand. Zudem ist das Förderband ein reines Transportmittel, welches keine Vereinzelung der Saatkörner bewirkt, wohl aber durch Beschleunigung der Saatkörner deren Eindringen in die Zellen unterstützt.

Es ist weiter eine Vorrichtung zum Ablegen von Samenkörnern bekannt (DE-A-1 457 832), welche ein Zellenrad aufweist, das um eine horizontale Achse drehbar ist. Die Zellen dieses Rades sind allein nach radial aussen hin offen. Ein Umfangsabschnitt des Zellenrades reicht in einen Saatgutbehälter hinein, um dort die Zellen mit jeweils einem Saatkorn zu füllen. Die Zellen werden dann von einem Gehäuse radial aussen abgedeckt bis sie zu einer Auswurfstelle gelangen. An dieser im unteren Bereich des Zellenrades gelegenen Stelle fallen die in den Zellen befindlichen Saatkörner aufgrund der Schwerkraft und der Fliehkraft heraus und treffen in einen Spalt zwischen zwei aus flexiblem Werkstoff bestehenden Scheiben, deren Achsen so gegeneinander versetzt sind, dass diese beiden Scheiben an der einen Hälfte ihres Umfanges unmittelbar aneinander anliegen, während sie in der anderen Hälfte einen Spalt ungleicher Breite ergeben.

Die in den Spalt eingetretenen Saatkörner werden nun am Aussenrand der beiden Scheiben eingeklemmt und zu einer Abwurfstelle im unteren Bereich dieser beiden Scheiben mitgenommen, an der die Körner mit Hilfe eines Keils von den Scheiben gelöst werden. Die Körner werden dann in die Säfurche abgeworfen.

Nachteilig ist bei dieser bekannten Vorrichtung vor allem, dass die Saatkörner im freien Wurf an die beiden Scheiben und anschliessend von diesen aus in die Säfurche abgeführt werden. Beide Wurfwege sind in hohem Masse störungsanfällig und lassen deshalb Ungenauigkeiten in der Einzelkornablage befürchten. Zudem wird bei der Ablage der Saatkörner bei dieser bekannten Vorrichtung kein Andrücken der Saatkörner auf dem Erdreich herbeigeführt, so dass die gewünschte kapillare Wasserzuführung zu den Saatkörnern nicht sichergestellt werden kann.

Aus der GB-A-2 012 534 ist eine Präzisionssämaschine bekannt, bei der mittels einer mit Unterdruck beaufschlagten Vereinzelungstrommel Saatkörner an Sauglöchern gehalten und vereinzelt aus einem Saatgutvorrat bis zu einer Abwurfzelle im unteren Bereich der Vereinzelungstrommel mitgenommen werden. Hier wird der Unterdruck abgesperrt. Die vereinzelten Saatkörner fallen dann über eine kurze Strecke in eine Rinne eines Förderbandes, die von zwei verformbaren Lippen gebildet ist und durch diese geöffnet oder geschlossen wird. Das Förderband transportiert die Saatkörner bis zu einer Abwurfstelle, in der die Förderbandgeschwindigkeit entgegengesetzt gleich ist der Fahrgeschwindigkeit der Sämaschine, und wirft hier die Saatkörner ab.

Nachteilig ist bei dieser bekannten Maschine die aufwendige Ausbildung und Führung des Förderbandes sowie das Erfordernis, dass die einzelnen Saatkörner sowohl von der Vereinzelungstrommel zum Förderband sowie vom Förderband zum Erdreich frei fallen müssen. Dieser freie Fall ist von vielen Einflussgrössen abhängig, z.B. Windverhältnisse, Bodenbeschaffenheit, Korngrösse und -gewicht, und führt zwangsläufig zu Ungenauigkeiten in der Ablage.

Die Aufgabe der vorliegenden Erfindung besteht nun darin, die Nachteile der bisher bekannten einschlägigen Vorrichtungen zu vermeiden und eine Einzelkornsämaschine zu schaffen, welche sich durch eine zuverlässige, exakte Einzelkornablage und gleichzeitiger Einbettung der Saatkörner in den Boden auszeichnet.

Diese Aufgabe wird bei einer Einzelkornsämaschine der eingangs erwähnten Art dadurch gelöst, dass das Zellenrad als Scheibe ausgebildet ist, deren Dicke in dem die Zellen enthaltenden Aussenbereich etwa gleich oder kleiner ist als der kleinste Durchmesser der Saatkörner, dass die Zellen auch in beiden Axialrichtungen offen sind, dass die ringförmigen Klemmelemente in radialer Richtung nachgiebig ausgebildet oder angeordnet sind, die Saatkörner noch in den Zellen des Zellenrades ergreifen und ihrem unteren Bereich mit dem Erdreich in Druckberührung kommen.

Die im Zellenrad vorliegende Vereinzelung wird beim Übergang auf das Särad, beim Transport im Särad und beim Ablegen unmittelbar auf dem Boden in keiner Weise verfälscht, so dass Abstand und Plazierung der Saatkörner exakt eingehalten werden können. Es ist möglich, die Relation zwischen den Drehzahlen des Zellenrades einerseits und des Särades andererseits zu verändern, um damit den Saatkornabstand zu verändern. Auch bei einer solchen Änderung wird die Ablagegenauigkeit nicht vermindert. Das Eindrücken der Saatkörner in den Boden sichert zum einen die genaue Plazierung, stellt aber im übrigen sicher, dass aufgrund der erzeugten Bodenverfestigung im Bereich des Saatkorns die erforderliche Kapillarwirkung eintritt, die für die Auslösung des Keimvorgangs und anschliessend für die Entwicklung einer gesunden Pflanze erforderlich ist.

Dabei ergreifen die Klemmelemente die von dem Zellenrad in vorgegebener Zeit- und/oder Abstandsfolge greifbar dargebotenen Saatkörner, die somit vom Särad übernommen und beim Abrollen dies Rades in den Boden gedrückt und an ihn abgegeben werden. Das Särad kann entweder allein durch seinen Bodenkontakt oder aber durch einen zentralen Antrieb in Drehung versetzt werden.

Die erfindungsgemässe Einzelkornsämaschine kann ferner so ausgebildet sein, dass die Klemmelemente zwei Schlappreifen sind. Auf diese Weise wird Bodenaufbau beim Abrollen zuverlässig vermieden.

Die erfindungsgemässe Einzelkornsämaschine kann ferner so ausgebildet sein, dass das Särad als Sternrad ausgebildet ist und mehrere voneinander getrennte, mit Klemmelementen versehene Umfangsabschnitte aufweist. Auf diese Weise ergeben sich im Boden für jedes Saatkorn abgegrenzte Zonen, in denen durch Oberflächenverformung das gewünschte Kleinklima erzeugt wird.

Die erfindungsgemässe Einzelkornsämaschine kann ferner so ausgebildet sein, dass ein Sauglaftanschluss in den Spalt zwischen den Klemmelementen mündet. Auf diese Weise können erforderlichenfalls die Haltekräfte über die Klemmkräfte hinaus gesteigert werden.

Die erfindungsgemässe Einzelkornsämaschine kann ferner so ausgebildet sein, dass in den Spalt ein Abstreifer eingreift. Dieser Abstreifer dient insbesondere dazu, den Spalt zwischen den Klemmelementen von Bodenresten zu säubern.

Die erfindungsgemässe Einzelkornsämaschine kann ferner so ausgebildet sein, dass am Umfang des Särades eine Putzbürste angreift. Bei bestimmten Bodenverhältnissen kann die Selbstreinigung der verwendeten Klemmelemente u.U. nicht ausreichen. Dies könnte zu Störungen bei der Übernahme der Saatkörner vom Zellenrad führen. Die vorgeschlagene Putzbürste schliesst aber derartige Störungen aus.

Die erfindungsgemässe Einzelkornsämaschine kann ferner so ausgebildet sein, dass in dem Spalt zwischen den Klemmelementen ein mit dem Särad fest verbundenes Druckstück zur Abstützung der Saatkörner und zum Eindrücken dieser Körner in den Boden vorgesehen ist. Bei dem gewünschten Eindrücken der Saatkörner in den Boden müssen sich die Saatkörner am Särad abstützen. Dies kann am Boden des Spaltes oder aber durch ein besonderes Druckstück erfolgen, welches zwischen den Klemmelementen angeordnet ist.

Die erfindungsgemässe Einzelkornsämaschine kann ferner so ausgebildet sein, dass die Klemmelemente mit dem Druckstück zu einem Bauteil zusammengefasst sind. Bei dieser Ausbildung ergeben sich Vorteile in der Herstellung und bei der Montage.

Im folgenden Teil der Beschreibung werden einige Ausführungsformen der erfindungsgemässen Einzelkornsämaschine anhand von Zeichnungen beschrieben.

Es zeigt:

Fig. 1 eine schematische Ansicht einer Ausführungsform der erfindungsgemässen Einzelkornsämaschine,

Fig. 2 eine Ansicht eines Särades im Zusammenwirken mit dem unteren Abschnitt eines Zellenrades der Einzelkornsämaschine,

Fig. 3 einen Schnitt nach der Linie 3–3 in Fig. 2,

Fig. 4 einen Teilschnitt des Särades mit auf den Boden gedrückten Klemmelementen,

Fig. 5 einen Teilschnitt des Särades mit zu einem Bauteil zusammengefassten ringförmigen Klemmelementen und Druckteil,

Fig. 6 einen Schnitt durch den Kopf eines Arms eines sternförmig ausgebildeten Särades und

Fig. 7 einen Schnitt nach der Linie 7–7 in Fig. 6.

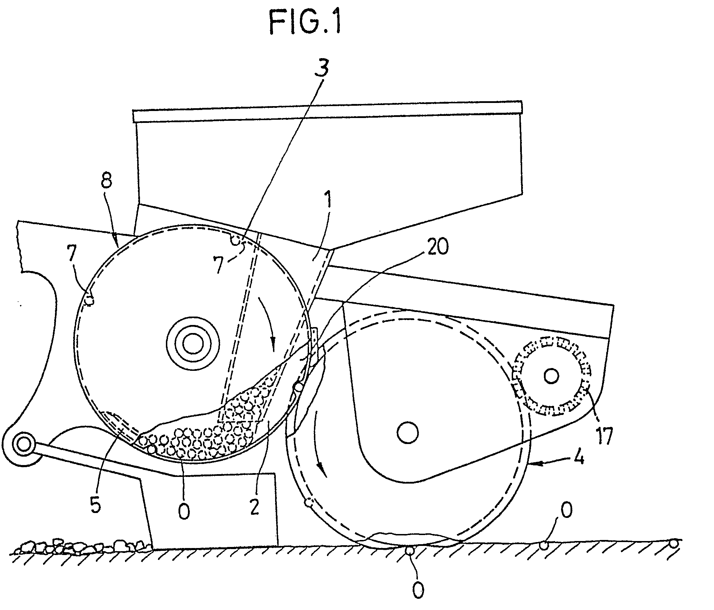

Die in Fig. 1 schematisch dargestellte Einzelkornsämaschine zeigt einen Saatgutbehälter 1, ein Zellenrad 2, eine das Zellenrad 2 auf der von dem Saatgutbehälter 1 abgewandten Seite abdeckende Rückwand 3 und ein mit dem Zellenrad 2 zusammenarbeitendes, um eine im wesentlichen horizontale Achse drehbar gelagertes Särad 4.

Das Zellenrad 2 ist als eine Scheibe ausgebildet, deren Zellen 7 sich als Einschnitte darstellen, welche sowohl nach radial aussen als auch in beiden Achsialrichtungen offen sind. Das um eine nicht dargestellte, im wesentlichen horizontale Achse drehbare Zellenrad 2 wird auf seiner von dem Saatgutbehälter 1 abgewandten Seite durch die Rückwand 3 abgedeckt. Nach radial aussen hin werden die Zellen 7 durch das Gehäuse 8 abgeschlossen.

Die Stärke oder Dicke des Zellenrades 2 ist geringer oder etwa gleich dem geringsten Durchmesser der auszusäenden Saatkörner 0. Dies bedeutet, dass die in einer Zelle 7 befindlichen Saatkörner 0 dann ergriffen werden, wenn elastische Klemmelemente beiderseits des Zellenrades 2 im Bereich einer Zelle 7 angreifen.

Das Zellenrad 2 tritt bei 20 aus dem Gehäuse 8 heraus. Die Abdeckungen der Zellen 7, welche den äusseren Rand des Zellenrades 2 radial aussen und seitlich umgeben, begleiten das Zellenrad 2 ein kleines Stück auch ausserhalb des Gehäuses 8.

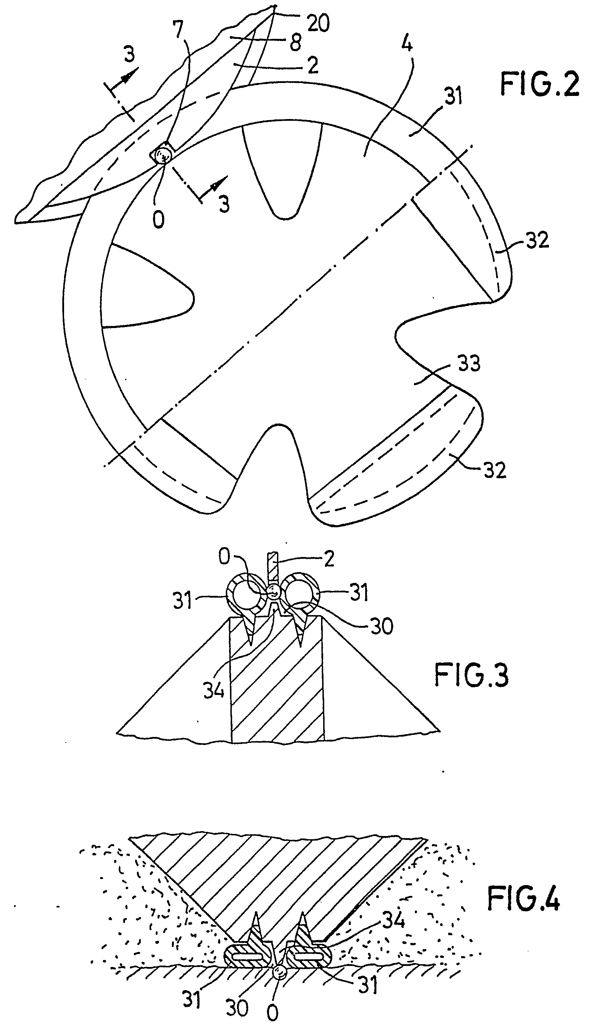

Das bei 20 über ein Stück aus dem Gehäuse 8 heraustretende Zellenrad 2 greift in seinem ausserhalb des Gehäuses 8 liegenden Bereich in einen Spalt 30 zwischen zwei elastischen Klemmelementen 31 ein, die am Umfang des Särades 4 befestigt sind. Die Klemmelemente 31 sind in Form von Schlappreifen ausgebildet, die elastisch nachgiebig einen aufeinanderzu und damit auf die beiden Seiten des Zellenrades 2 gerichteten Druck ausüben. Aufgrund ihrer Elastizität können sie sich auch geringfügig in die Zellen 7 des Zellenrades 2 eindrücken. In den Zellen 7 befindliche Saatkörner 0 werden somit zwischen den Klemmelementen 31 eingeklemmt und von diesen ergriffen, so dass sie zwangsläufig ohne jede Möglichkeit zu einer unerwünschten Lageveränderung aus der Bewegungsbahn der Zellen 7 in diejenige des Särades 4 überführt werden. Die in Form von Schlappreifen ausgebildeten Klemmelemente können durchgehend über den gesamten Umfang des Särades 4 verlaufen, wie dies in Fig. 2 in der oberen Hälfte dargestellt ist. Nach einer anderen Ausführungsform können aber auch Klemmelemente 32 vorgesehen sein, die lediglich auf den radial aussen liegenden Enden der einzelnen Arme 33 des in Form eines Sternes ausgebildeten Särades 4 sitzen (Fig. 2, unterer Teil).

Am Umfang des Särades 4 greift eine Putzbürste 17 an, die der Reinigung des Särades 4 und seiner Klemmelemente dient.

Zwischen den Klemmelementen 31 bzw. 32 befindet sich ein radial nach aussen vorstehendes Druckstück 34.

In dem Bereich, in dem das Särad 4 auf dem Boden zur Anlage kommt und radial wirkende Druckkräfte auf die Klemmelemente 31, 32 ausgeübt werden, drücken sich diese Elemente zusammen. Dies führt dazu, dass das Druckstück 34 hier zwischen den Klemmelementen 31, 32 nach aussen vorsteht und das Saatkorn 0, welches nunmehr von den Klemmelementen 31, 32 freigegeben wird, in den Boden drückt.

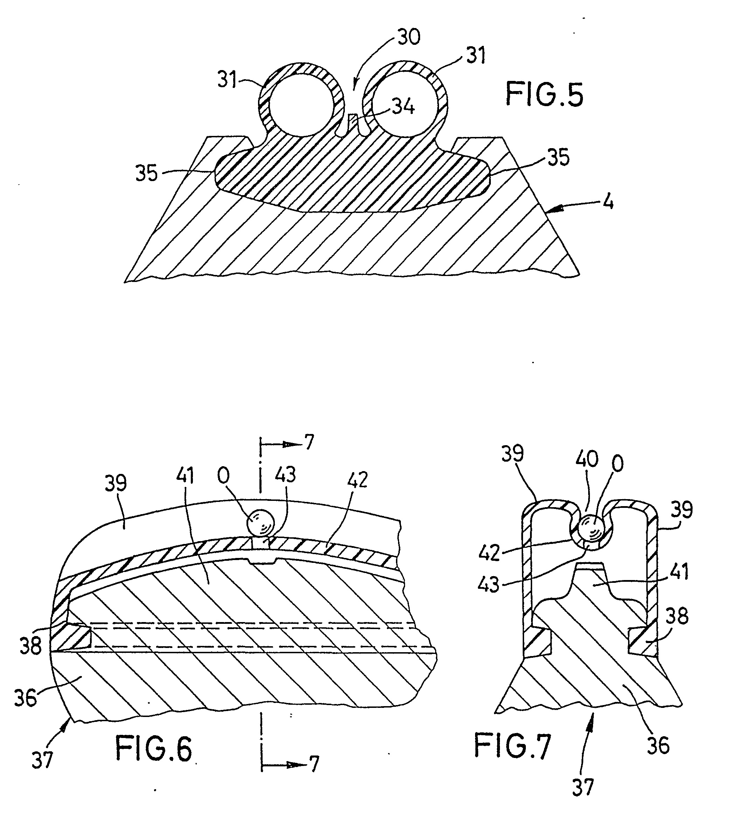

Gemäss Fig. 5 sind zwei in Form von Schlappreifen ausgebildete Klemmelemente 31 mit einem dazwischen im Bereich des Spaltes 30 liegenden Druckstück 34 einstückig ausgebildet und in eine angepasste Aufnahmenut 35 am Umfang des Särades 4 eingesetzt.

Die Fig. 6 und 7 zeigen den Kopf 36 eines Arms 37 eines sternförmigen Särades 4. Auf diesen Kopf 36 ist eine Kappe 38 aufgesetzt, die zwei Klemmelemente 39 hat. Diese Klemmelemente 39 sind Wulste aus einem nachgiebigen Material, die zwischen sich einen Spalt 40 zum Einklemmen und Halten von Saatkörnern 0 aufweist. In den Raum unter dem Spalt 40 ragt ein Druckstück 41 hinein. Wenn nun die Klemmelemente 39 beim Abrollen auf dem Boden einen radial gerichteten Druck erfahren, dann werden sie entsprechend verformt, wobei sich der Boden 42 des Spaltes 40 auf dem Druckstück 41 abstützt und damit das Saatkorn 0 radial nach aussen an den Klemmelementen 39 vorbei in den Erdboden drückt.

Die Kappe 38 ist als ein Hohlkörper ausgebildet und kann an eine nicht dargestellte Unterdruckleitung angeschlossen werden. In dem Boden 42 des Spaltes 40 ist eine Bohrung 43 vorgesehen. Durch diese Bohrung 43 hindurch wirkt sich der im Innern der Kappe 38 befindliche Unterdruck aus und erhöht die auf die Saatkörner 0 wirkenden Haltekräfte über die auftretenden Klemmkräfte hinaus.

**Patentansprüche**

1. Einzelkornsämaschine mit einem Saatgutbehälter (1), mit einem radial nach aussen offene Zellen (7) zur Einzelaufnahme von Saatkörnern aufweisenden Zellenrad (2), das weitgehend von einem Gehäuse (8) umschlossen um eine im wesentlichen horizontal verlaufende Achse drehbar ist und mit einem Teil seines Umfangsbereichs den unteren Teil des Saatgutbehälters (1) abgrenzt, und mit einem ebenfalls um eine im wesentlichen horizontale, quer zur Fahrtrichtung der Einzelkornsämaschine verlaufende Achse drehbaren Särad (4), welches in seinem oberen Bereich mit dem Zellenrad (2) zusammenarbeitet und an seinem Umfang die in den Zellen (7) befindlichen vereinzelten Saatkörner aufnehmende, zwischen sich einen in Umfangsrichtung verlaufenden Spalt frei lassende, in Achsrichtung elastische ringförmige Klemmelemente (31; 32; 39) aufweist, welche den Abstand der Saatkörner in einer einstellbaren Relation zum Abstand der Zellen (7) halten, die Körner mitnehmen und im unteren Bereich abgeben, dadurch gekennzeichnet, dass das Zellenrad (2) als Scheibe ausgebildet ist, deren Dicke in dem die Zellen (7) enthaltenden Aussenbereich etwa gleich oder kleiner ist als der kleinste Durchmesser der Saatkörner, dass die Zellen (7) auch in beiden Axialrichtungen offen sind, dass die ringförmigen Klemmelemente (31; 32; 39) in radialer Richtung nachgiebig ausgebildet oder angeordnet sind, die Saatkörner noch in den Zellen (7) des Zellenrades (2) ergreifen und in ihrem unteren Bereich mit dem Erdreich in Druckberührung kommen.

2. Einzelkornsämaschine nach Anspruch 1, dadurch gekennzeichnet, dass die Klemmelemente (31; 32) zwei Schlappreifen sind.

3. Einzelkornsämaschine nach einem der vorhergehenden Ansprüche, dadurch gekennzeichnet, dass das Särad (4) als Sternrad ausgebildet ist und mehrere voneinander getrennte, mit Klemmelementen (32) versehene Umfangsabschnitte aufweist.

4. Einzelkornsämaschine nach einem der vorhergehenden Ansprüche, dadurch gekennzeichnet, dass ein Saugluftanschluss in den Spalt (40) zwischen den Klemmelementen (39) mündet.

5. Einzelkornsämaschine nach einem der vorhergehenden Ansprüche, dadurch gekennzeichnet, dass in den Spalt (30, 40) ein Abstreifer eingreift.

6. Einzelkornsämaschine nach einem der vorhergehenden Ansprüche, dadurch gekennzeichnet, dass am Umfang des Särades (4) eine Putzbürste (17) angreift.

7. Einzelkornsämaschine nach einem der vorhergehenden Ansprüche, dadurch gekennzeichnet, dass in dem Spalt (30, 40) zwischen den Klemmelementen (31; 32; 39) ein mit dem Särad (4) fest verbundenes Druckstück (34; 41) zur Abstützung der Saatkörner (0) und zum Eindrücken dieser Körner in den Boden vorgesehen ist.

8. Einzelkornsämaschine nach Anspruch 7, dadurch gekennzeichnet, dass die Klemmelemente (31) mit dem Druckstück (34) zu einem Bauteil zusammengefasst sind.

## Claims

1. Single grain sowing machine with a seed container (1), with a scoop wheel (2) with scoops (7) radially open to the outside for individual taking up of grain, which, largely enclosed by a housing (8), is capable of turning around a mainly horizontally running axle with a part of its circuit closing off the lower part of the seed container (1), and with a sowing wheel (4) similarly turning around a largely horizontal axle placed laterally to the driving direction of the single grain sowing machine, which in its upper section comes together with the scoop wheel (2) and which has on its periphery flexible, circular gripping elements (31; 32; 39) which take up the individual grains carried in the scoops (7) and which leave a gap in the direction of the periphery between themselves, keep the distance between the grains in a determinable relation to the distance between the scoops (7), and transport the grains to deposit them in the lower area, characterised in that the scoop wheel (2) is in the shape of a disk whose thickness in the outer area where the scoops (7) are positioned is approximately equal to or smaller than the smallest circumference of the grains, in that the scoops (7) are open in both axial directions, the circular gripping elements (31; 32; 39) are formed to yield or are positioned in a radial direction, they grip the grains in the scoops (7) of the scoop wheel (2) and in their lower section come into pressure contact with the earth.

2. Single grain sowing machine in accordance with claim 1, characterised in that the gripping elements (31; 32) are two loose rings.

3. Single grain sowing machine in accordance with one of the previous claims, characterised in that the sowing wheel (4) is in the shape of a star wheel and has several individually separate sections of circumference containing gripping elements (32).

4. Single grain sowing machine in accordance with one of the previous claims, characterised in that a suction air connection is present in the gap (40) between the gripping elements (39).

5. Single grain sowing machine in accordance with one of the previous claims, characterised in that a scraper acts in the gap (30, 40).

6. Single grain sowing machine in accordance with one of the previous claims, characterised in that a cleaning brush (17) acts on the periphery of the sowing wheel (4).

7. Single grain sowing machine in accordance with one of the previous claims, characterised in that in the gap (30, 40) between the gripping elements (31; 32; 39), there is a thrust piece (34; 41) fixed to the sowing wheel (4) for the purpose of bracing the grains (0) and thrusting them into the soil.

8. Single grain sowing machine in accordance with claim 7, characterised in that the gripping elements (31) are brought together with the thrust piece (34) to form one component part.

## Revendications

1. Semoir monograine portant un réservoir à graines (1) avec une roue à cellules (2) présentant des cellules radiales ouvertes vers l'extérieur (7) pouvant recevoir des graines individuelles, roue entourée presque entièrement d'un capot (8) et tournant autour d'un axe en position essentiellement horizontale, délimitant avec une partie de sa circonférence la partie inférieure du réservoir à graines (1), et portant également une roue semeuse (4) tournant autour d'un axe à mouvement perpendiculaire au sens de marche du semoir monograine, roue semeuse collaborant dans sa partie supérieure avec la roue à cellules (2) et présentant des éléments de serrage élastiques en forme d'anneaux (31; 32; 39) destinés à recevoir sur sa circonférence les graines individuels se trouvant dans les cellules (7), éléments de serrage laissant une fente libre sur toute la circonférence, éléments destinés à obtenir un espacement réglable des grains par rapport à l'espace de cellules (7), à emporter les grains et à les libérer au niveau inférieur, caractérisé en ce que la roue à cellules (2) est en forme de disque, dont l'épaisseur de la partie extérieure portant les cellules (7) est à peu près égale ou inférieure au diamètre le plus réduit des grains, en ce que les cellules (7) sont également ouvertes dans les deux sens axiaux, en ce que les éléments annulaires de fixation (31; 32; 39) sont disposés de façon flexible dans le sens radial, prennent les grains se trouvant encore dans les cellules (7) de la roue à cellules (2) et, au bas, entrent en contact avec la terre.

2. Semoir monograine selon revendication 1, caractérisé en ce que les éléments de serrage (31; 32) sont deux pneus mous.

3. Semoir monograine selon l'une des revendications pré-citées, caractérisé en ce que la roue semeuse (4) est une roue-étoile et présente plusieurs sections circonférencielles séparées entre elles et munies d'éléments de serrage (32).

4. Semoir monograine selon l'une des revendications pré-citées, caractérisé en ce qu'une prise à air d'aspiration est montée dans la fente (40) entre les éléments de serrage (39).

5. Semoir monograine selon l'une des revendications pré-citées, caractérisé en ce qu'un racleur s'introduit dans la fente (30, 40).

6. Semoir monograine selon l'une des revendications pré-citées, caractérisé en ce qu'une brosse de nettoyage (17) entre en action autour de la roue semeuse (4).

7. Semoir monograine selon l'une des revendications pré-citées, caractérisé en ce que dans la fente (30, 40) entre les éléments de serrage (31; 32; 39) un élément de pression (34; 41) relié fermement à la roue semeuse (4) est prévu pour maintenir les grains (0) et les introduire dans la terre.

8. Semoir monograine selon la revendication 7, caractérisé en ce que les éléments de serrage (31) sont reliés à l'élément de pression (34) pour n'en former qu'un seul.

# FIG.1

# FIG.2

# FIG.3

# FIG.4

FIG.5

FIG.6

FIG.7